(19) Europäisches Patentamt
European Patent Office
Office européen des brevets

(11) Numéro de publication: **0 218 487**
**B1**

(12) # FASCICULE DE BREVET EUROPEEN

(45) Date de publication du fascicule du brevet: **24.10.90**

(51) Int. Cl.[5]: **C 01 F 7/68,** C 02 F 1/52

(21) Numéro de dépôt: **86401521.9**

(22) Date de dépôt: **09.07.86**

(54) **Chlorosulfate d'aluminium basique, son procédé de préparation et son application comme agent coagulant.**

(30) Priorité: **12.07.85 FR 8510708**
**23.06.86 FR 8609005**
**23.06.86 FR 8609006**

(43) Date de publication de la demande:
**15.04.87 Bulletin 87/16**

(45) Mention de la délivrance du brevet:
**24.10.90 Bulletin 90/43**

(84) Etats contractants désignés:
**AT BE CH DE FR GB IT LI LU NL**

(56) Documents cités:
**EP-A-0 145 686**
**CH-A- 625 425**
**FR-A-2 036 685**
**FR-A-2 125 337**
**FR-A-2 281 895**
**FR-A-2 418 297**
**FR-A-2 534 897**
**US-A-3 252 899**

**Le dossier contient des informations techniques présentées postérieurement au dépôt de la demande et ne figurant pas dans le présent fascicule.**

(73) Titulaire: **RHONE-POULENC CHIMIE**
**25, quai Paul Doumer**
**F-92408 Courbevoie Cédex (FR)**

(72) Inventeur: **Boutin, Jean**
**7, rue Buzy**
**F-69780 - Mions (FR)**
Inventeur: **Combet, André**
**141, rue Joliot Curie**
**F-69005 - Lyon (FR)**
Inventeur: **Communal, Jean-Pierre**
**15, avenue du Docteur Neige**
**F-94210 - la Varenne Saint Hilaire (FR)**

(74) Mandataire: **Dubruc, Philippe et al**
**RHONE-POULENC INTERSERVICES Service Brevets Chimie 25, quai Paul-Doumer**
**F-92408 Courbevoie Cédex (FR)**

(56) References cited:
**CHEMICAL ABSTRACTS, vol. 100, no. 8, 1984, page 301, résumé no. 56468j, Columbus, Ohio, US; G.A. LEKIMME: "WAC for water treatment", & TRIB. CEBEDEAU 1983, 36 (475-476), 353-5**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**EP 0 218 487 B1**

**Description**

La présente invention concerne un chlorosulfate d'aluminium basique, son procédé de préparation et son application comme agent coagulant au traitement d'un milieu aqueux.

On connaît divers agents coagulants susceptibles d'être utilisés pour le traitement des effluents, des eaux résiduaires ou des eaux usées. On peut citer le chlorure ferreux, le chlorure ferrique, le sulfate ferreux, le sulfate ferrique, le chlorosulfate ferrique.

On peut mentionner aussi plus particulièrement les sulfates d'aluminium basiques et notamment les chlorosulfates d'aluminium basiques. Parmi ces derniers, on peut citer des composés tels ceux décrits dans la demande de brevet français No. 2 418 297.

Ces produits sont efficaces. Néanmoins, ces derniers temps, une demande s'est faite sentir pour des produits conduisant à des résiduels d'aluminium dans les eaux traitées de plus en plus faibles. On connaît également les chlorosulfates d'aluminium basiques tels ceux décrits dans la demande de brevet français No. 2 036 685.

On cherche aussi des produits dont l'utilisation soit la plus souple possible.

Un premier objet de l'invention est donc un chlorosulfate d'aluminium basique donnant des eaux traitées à une teneur en aluminium résiduaire très faible.

Un deuxième objet de l'invention est un procédé de préparation simple de ce produit.

Un troisième objet de l'invention est un procédé de fabrication de chlorosulfates d'aluminium basiques qui présentent une aptitude à former des boues à haut coefficient de cohésion.

Un quatrième objet de l'invention est un procédé de préparation de solutions de chlorosulfate d'aluminium basique à la fois incolores et de faible turbidité.

Dans ce but, le chlorosulfate d'aluminium basique selon l'invention est caractérisé en ce qu'il comprend un produit ayant pour formule:

$$Al_nOH_m(SO_4)_kCl_{3n-m-2k}$$

dans laquelle la basicité ou le rapport

$$\frac{m}{3n} \times 100$$

est compris entre 40% et 65%, en ce qu'il présente un rapport équivalent Al/équivalent Cl compris entre 2,8 et 5, une masse moléculaire apparente MA mesurée par diffusion de lumière classique de valeurs suivantes: MA = 7 000—35 000, ledit chlorosulfate d'alumine basique étant caractérisé en ce qu'il présente des diamètres hydrodynamiques apparents ØZ et ØW mesurés par diffusion quasi-élastique de la lumière de valeurs suivantes:

ØZ (nm) = 35 — 2 50 (350—2500 Å)

ØW (nm) = 20 — 1 20 (200—1200 Å)

Le chlorosulfate d'aluminium basique selon l'invention peut également être caractérisé par son procédé d'obtention. Le chlorosulfate d'aluminium basique comprenant le produit de formule générale:

$$Al_nOH_m(SO_4)_kCl_{3n-m-2k}$$

est alors caractérisé en ce qu'il est susceptible d'être obtenu par un procédé comprenant une étape de préparation d'une bouillie de chlorure de calcium et de carbonate de calcium (bouillie chlorocarbonatée), une étape de mise en contact de la bouillie chlorocarbonatée avec du sulfate d'aluminium, l'addition de la bouillie se faisant sur une durée variant généralement ente 50 minutes et 4 heures, puis une étape de séparation du mélange réactionnel ainsi obtenu permettant de séparer un gâteau de sulfate de calcium et un filtrat contenant le chlorosulfate d'aluminium basique, les quantités de bouillie chlorocarbonatée et de sulfate d'aluminium étant telles que l'on ait pour le chlorosulfate d'aluminium basique obtenu un rapport

$$\frac{m}{3n} \times 100$$

compris entre 40% et 65% et un rapport équivalent Al/équivalent Cl compris entre 2,8 et 5.

Par ailleurs, d'une manière plus générale, le procédé de préparation du chlorosulfate d'aluminium basique selon l'invention est caractérisé en ce qu'il comprend une étape de préparation d'une bouillie de chlorure de calcium et de carbonate de calcium (bouillie chlorocarbonatée), une étape de mise en contact de la bouillie chlorocarbonatée avec du sulfate d'aluminium, l'addition de la bouillie se faisant sur une

durée variant généralement entre 50 minutes et 4 heures, puis une étape de séparation du mélange réactionnel ainsi obtenu, ce par quoi on sépare un gâteau de sulfate de calcium et un filtrat contenant le chlorosulfate d'aluminium basique.

Dans la suite de la description, ce procédé sera identifié comme le procédé général de fabrication d'un chlorosulfate d'aluminium basique selon l'invention.

L'invention et les avantages qu'elle procure seront mieux compris à la lecture de la description et des exemples concrets mais non limitatifs qui vont suivre.

Le chlorosulfate d'aluminium basique selon l'invention a été défini plus haut.

On peut préciser que sa basicité peut être avantageusement comprise entre 40% et 60% et plus particulièrement 45 et 56%. En outre, le produit selon l'invention présente un rapport équivalent Al/équivalent Cl compris entre 2,8 et 5, préférentiellement 3,2 et 5 et plus particulièrement entre 3,2 et 4. Enfin, il est avantageux que le produit selon l'invention présente un taux de désulfatation (ce taux représentant le rapport de la quantité de sulfate éliminé à celle présente dans le sulfate d'aluminium de départ) compris entre 70 et 90%, de préférence entre 70 et 85% et tout particulièrement entre 75 et 82%.

Ces trois paramètres: basicité, rapport Al/Cl tel que défini ci-dessus et taux de désulfatation lorsqu'ils répondent aux valeurs fixées ci-dessus confèrent au produit de l'invention une très bonne stabilité. Cette stabilité est représentée par le temps de stockage du produit en l'absence de toute précipitation; dans le cas présent, cette stabilité peut être de plusieurs mois à la température ambiante.

Par ailleurs, le produit de l'invention présente une masse apparente élevée comprise entre 7 000 et 35 000 et plus particulièrement entre 22 000 et 32 000. Cette masse est déterminée par diffusion de lumière classique à partir d'un échantillon de chlorosulfate d'aluminium basique selon l'invention en solution aqueuse à une concentration en $Al_2O_3$ à 8,3% en poids. La mesure se fait directement après l'obtention de l'échantillon par le procédé de l'invention. Cette mesure est faite pour des intensités moyennes diffusées à l'angle 90°.

En outre, les diamètres hydrodynamiques du produit ont été mesurés par diffusion quasi-élastique de la lumière pour une concentration en $Al_2O_3$ identique à celle définie ci-dessus.

Les produits selon l'invention peuvent présenter des diamètres hydrodynamiques en poids ØW exprimés en nm compris entre 20 et 120 nm (200 et 1200 Å), plus particulièrement compris entre 80 et 110 nm (800 et 1100 Å). En ce qui concerne les diamètres hydrodynamiques d'ordre ØZ exprimés en nm, ceux-ci peuvent être compris entre 35 et 250 nm (350 et 2500 Å), plus particulièrement 150 et 220 nm (1500 et 2200 Å).

Enfin, des mesures par RMN de l'aluminium monomère ont permis de montrer qu'il y a de 15 à 25% d'aluminium monomère dans le chlorosulfate d'aluminium basique de l'invention, el reste de l'aluminium étant sous forme polymère.

Les produits selon l'invention peuvent de manière équivalente et indifférement être également charactérisés par leur masse moléculaire moyenne en poids $\overline{M}_w$ et leurs diamètres hydrodynamiques réels moyens $ØZ_r$ et $ØW_r$.

La mesure de ces valeurs est réalisée de manière classique par extrapolation à concentration nulle des courbes représentant respectivement l'inverse de la masse moléculaire apparente MA et l'inverse des diamètres hydrodynamiques apparents en fonction de la concentration de la fraction polymérisée de chlorosulfate d'aluminium basique étudiée. La correspondance entre la valeur réelle moyenne et la valeur apparente de la masse moléculaire est en effet donnée par la relation de Debye:

$$\frac{1}{\overline{M}_w} = \frac{1}{\overline{MA}} + Bc$$

dans laquelle c représente la concentration de la solution de chlorosulfate d'aluminium basique et B une constante (coefficient du viriel).

De la même façon, l'interprétation des correllogrammes (voir par exemple l'ouvrage de PUSEY "Photon Correlation and Light Beating Spectroscopy" aux éditions PLENUM Press de 1973, page 387) permet d'accéder pour chaque concentration aux diamètres hydrodynamiques apparents ØZ et ØW et, par extrapolation à concentration nulle, aux diamètres réels moyens.

On utilisera avantageusement comme diluant pour la réalisation des échantillons de diverses concentrations le surnageant que l'on obtient par ultracentrifugation prolongée des solutions de chlorosulfate d'aluminium basique obtenues par la mise en oeuvre du procédé de l'invention. Ce surnageant est en effet parfaitement compatible avec les solutions de polymères et ne diffuse pratiquement plus la lumière.

La correspondance entre le système des valeurs réelles et le système des valeurs apparentes qui ont été données ci-avant fait que les produits de l'invention peuvent être caractérisés par une masse moléculaire moyenne en poids comprise entre 10 000 et 300 000, et plus particulièrement comprise entre 19 000 et 30 000. De même, les diamètres hydrodynamiques réels moyens d'ordre $ØZ_r$ sont compris entre 9 et 45 nm (90 et 450 Å), et plus particulièrement entre 10 et 15 nm (100 et 150 Å), et ceux d'ordre $ØW_r$ sont compris entre 5 et 30 nm (50 et 300 Å), plus particulièrement ente 6 et 8 nm (60 et 80 Å).

Le procédé de préparation du produit selon l'invention va maintenant être décrit.

Dans une première étape, on prépare une bouillie à partir d'un mélange de carbonate de calcium et de

chlorure de calcium. La quantité de chlorure de calcium sera fixée en fonction de la basicité et du taux de désulfatation que l'on a fixées pour le produit.

Cette bouillie est ensuite mise en contact avec du sulfate d'aluminium, généralement sous forme d'une solution aqueuse. On opère généralement avec une solution à 8,3% en poids d'$Al_2O_3$.

L'addition de la bouillie se fait sur une durée qui peut varier généralement ente 50 minutes et 4 heurs. Cette addition est régulée de manière à limiter au maximum les mousses de gaz carbonique qui se forment lors de la réaction.

Le mélange réactionnel est agité (agitation non cisaillante) et maintenu à une température qui est généralement située entre 35°C et 50°C. Une température supérieure peut amener des réactions parasites. Une température inférieure peut amener des difficultés lors de la filtration ultérieure. Selon un mode de réalisation particulier de l'invention, on peut prévoir après l'addition de la totalité de la bouillie de chlorure de calcium et de carbonate de calcium, une étape de mûrissement et de refroidissement du milieu réactionnel.

Dans ce cas, on laisse refroidir le mélange réactionnel jusqu'à une température comprise habituellement entre 5°C et 20°C. Par ailleurs, pendant le mûrissement, le mélange est maintenu sous agitation non cisaillante.

La durée du mûrissement varie habituellement entre 45 minutes et 3 heures.

Il peut être aussi interéssant de prolonger l'étape de murissement par une autre étape dans laquelle on maintient en température le mélange réactionnel par exemple entre 5 et 20°C. Le maintien en température peut durer entre 15 minutes et une heure par exemple.

Après la réaction et éventuellement l'étape de mûrissement et de refroidissement, le milieu réactionnel subit ensuite une séparation. La séparation peut se faire selon tout moyen connu, notamment par filtration, centrifugation, essorage ou décantation. De préférence, on procèdera par filtration. De plus, il peut être avantageux d'utiliser un filtre sous pression.

A l'issue de la filtration, on récupère un gâteau comprenant essentiellement du sulfate de calcium et un filtrat qui constitue la production et comprenant le chlorosulfate d'aluminium basique selon l'invention.

Le produit obtenu peut être avantageusement utilisé pour le traitement d'un milieu aqueux tel que par exemple une eau potable, une eau d'alimentation d'usine ou une eau usée.

Dans ce cas, le produit est ajouté au milieu aqueux dans des proportions variables en fonction de l'eau à traiter.

Dans cette application, le produit de l'invention permet d'obtenir un taux d'aluminium résiduaire dans le milieu traité particulèrement bas. Par ailleurs, alors qu'il est généralement nécessaire avec les produits de l'art antérieur de traiter les milieux aqueux à des pH en dessous de 8 pour obtenir un taux acceptable d'aluminium résiduaire, cela n'est pas obligatoire avec le produit de l'invention. Ceci rend donc son utilisation beaucoup plus souple.

D'autre part, la Demanderesse a été également amenée à mettre au point des chlorosulfates d'aluminium basiques à propriétés améliorées, notamment en ce qui concerne le coefficient de cohésion des boues contenues dans les milieux aqueux traités par de tels produits.

On sait en effet que les principaux appareillages destinés au traitement des eaux sont constitués de clarificateur par gravité reposant sur le principe de la sédimentation, c'est à dire l'élimination des matières en suspension dans l'eau par décantation gravitaire.

Le bac de décantation contient ainsi dans son fond un lit de boues et, surnageant, un effluent ladite clarifié qui s'écoule par surverse.

Mais, compte tenu des conditions de marche et de production de ce type d'installations, on peut noter d'importantes variations de vitesse d'admission de l'eau à traiter au sein des appareillages de décantation.

Ceci a pour effet de perturber la décantation et dans certains cas de nuire à la qualité de l'eau décantée lorsque les coefficients de cohésion des boues produites sont insuffisants.

On comprend dès lors que ces variations de débit au sein d'une installation ne seront acceptables que si la solidité du lit de boues dans la zone de décantation est suffisante.

En d'autres termes, pour une cohésion donnée du lit de boues, plus la vitesse de débordement désirée sera élevée et moins la sédimentation se fera dans des conditions acceptables.

Pour résoudre ce problème, la Demanderesse a mis au point un perfectionnement au procédé de fabrication décrit plus haut, perfectionnement caractérisé en ce que l'on fait réagir en continu la bouillie chlorocarbonatée avec le sulfate d'aluminium.

La Demanderesse a en effet découvert qu'un tel procédé perfectionné permettait d'aboutir à des produits présentant, de manière totalement inattendue et surprenante, une aptitude à former des boues à coefficients de cohésion nettement améliorés.

Le présent procédé se différencie donc essentiellement du procédé décrit plus haut par son caractère continu.

On entend par continu un procédé se déroulement sans interruption des flux de matières premières entrantes (bouillie chlorocarbonatée et sulfate d'aluminium), de produits en cours de transformation (sulfate d'aluminium en cours de basification) et de produits finis sortants (sulfate d'aluminium à la basicité désirée mélangé avec le gypse formé).

La mise en contact de la bouillie chlorocarbonatée avec le sulfate d'aluminium peut être effectuée en une seule phase.

Toutefois, selon un mode particulier de réalisation de l'invention, la basification du sulfate d'aluminium se fait en au moins deux phases successives par réaction de la bouillie chlorocarbonatée avec le sulfate d'aluminium et dans des conditions telles que la basicité du chlorosulfate d'aluminium présent dans le milieu réactionnel obtenu après chaque phase de basification est croissante de la première à la dernière phase.

Pratiquement, les réactions successives de basification du sulfate d'aluminium ont lieu dans des réacteurs, au moins au nombre de deux, disposés en série.

Le nombre de réacteurs n'est théoriquement pas limité, si ce n'est par un impératif d'ordre économique. Avantageusement, on opèrera avec deux réacteurs.

Selon un mode préférentiel de réalisation de l'invention, on fait réagir dans la première phase tout le sulfate d'aluminium avec une première partie de la bouillie chlorocarbonatée, puis on fait réagir successivement des fractions de la partie restante de la bouillie chlorocarbonatée avec le milieu réactionnel issu de chacune des phases précédentes, ce par quoi l'on obtient dans la dernière phase le chlorosulfate d'aluminium de basicité désirée.

Pratiquement, on alimente donc en continu la solution initiale de $Al_2(SO_4)_3$ uniquement dans le premier réacteur dans lequel on introduit conjointement de la bouillie chlorocarbonatée; le milieu réactionnel obtenu alimente alors le deuxième réacteur dans lequel on introduit à nouveau de la bouillie chlorocarbonatée de manière à augmenter la basicité du chlorosulfate d'aluminium contenu dans le milieu réactionnel issu du premier réacteur, et l'on répète l'opération dans tous les réacteurs suivants de manière à obtenir dans le dernier réacteur un chlorosulfate d'aluminium avec la basicité désirée.

Selon un mode avantageux de réalisation de l'invention, on divise un flux principal de bouillie chlorocarbonatée en n fractions que l'on répartit parallelement sur les n réacteurs, de sorte que la basicité moyenne du chlorosulfate d'aluminium présent dans le milieu réactionnel issu successivement de chaque réacteur croisse progressivement pour arriver à la basicité finale désirée à la sortie du dernier réacteur.

Généralement, on opère de manière telle que la basicité du chlorosulfate d'aluminium présent dans le milieu réactionnel issu du premier réacteur soit comprise entre 15 et 35%.

Les réacteurs de basification sont agités modérement (agitation non cisaillante) pour maintenir le milieu réactionnel homogène.

Ces réacteurs sont maintenus à une température comprise généralement entre 35 et 50°C.

Comme dans le cas du procédé général, le milieu réactionnel issu du dernier réacteur peut subir avant séparation, notamment par filtration, une étape de mûrissement et de refroidissement.

La Demanderesse à été amenée en outre à mettre au point des solutions de chlorosulfates d'aluminium basiques à propriétés améloirées, notamment en ce qui concerne leur coloration et leur turbidité.

En effet, les solutions de chlorosulfate d'aluminium basique obtenues après filtration du milieu réactionnel peuvent présenter dans certains cas d'une part une couleur allant du brun très foncé au jaune, et d'autre part une turbidité très largement supérieure à une certaine d'unités NTU.

Cette turbidité qui peut être rédhibitoire est dûe à un taux de matières solides en suspension particulièrement élevé, notamment en ce qui concerne les fines de gypse qui ont traversé le filtre lors de l'étape de filtration, et on peut penser que la forte coloration des solutions obtenues provient d'impuretés colorantes à base notamment de fer ou de substances humiques, la nature et la quantité de ces impuretés colorantes dans le produit final variant bien sûr suivant la qualité des matières premières utilisées.

L'objet du présent perfectionnement est donc de proposer un procédé de préparation de solutions de chlorosulfate d'aluminium basique à la fois incolores et de faible turbidité, cette turbidité pouvant être inférieure à une dizaine d'unités NTU.

Dans ce but, la Demanderesse a mis au point un perfectionnement aux procédés de fabrication exposés ci-avant dans la description, perfectionnement caractérisé en ce que l'on ajoute dans au moins une étape ou phase quelconque précitée, ensemble ou séparement, au moins un agent adsorbant et au moins un polyelectrolyte floculant du type non ionique ou cationique.

La Demanderesse a en effet découvert qu'en mettant en oeuvre un tel perfectionnement on aboutissait de manière totalement inattendue et surprenante à des produits à la fois incolores et limpides.

Ce procédé se caractérise donc par le fait que l'on utilise un agent adsorbant et un polyelectrolyte floculant du type non ionique ou cationique.

Comme agent adsorbant convenant pour la présente invention, on peut citer notamment le charbon actif, l'alumine activée, les alumino-silicates, les gels de silice, la magnésie et l'argile.

Les agents adsorbants décrits ci-dessus peuvent bien entendu être utilisés seuls ou en combinaison.

Selon un mode préférentiel de réalisation de l'invention, on utilisera du charbon actif.

Cet agent adsorbant peut être introduit à tous les niveaux de la fabrication du chlorosulfate d'aluminium basique, mais dans tous les cas avant l'étape de séparation, notamment de filtration.

Il a été toutefous trouvé qu'il était particulièrement avantageux de l'introduire lors de l'étape de préparation de la bouillie chlorocarbonatée. C'est en effet dans ce cas particulier que les meilleurs décolorations ont été observées.

Les quantités d'agent adsorbant à introduire ne sont pas critiques et peuvent varier dans de larges limites suivant la qualité finale désirée pour le produit.

Dans le cas particulier où l'on opère avec du charbon actif, on utilise habituellement une quantité

comprise entre 0,5 et 10 kg de produit par tonne de sulfate d'aluminium à basifier. Préférentiellement, cette quantité est comprise entre 1 et 5 kg de charbon actif/tonne de sulfate d'aluminium.

Les polyelectrolytes utilisés dans la présente invention sont des polymères de haut poids moléculaire, lequel est généralement supérieur à un ou plusieurs millions.

Concernant les polyelectrolytes du type non ionique qui peuvent être utilisés dans la présente invention, on peut citer notamment les polyacrylamides, les polyoxydes d'éthylène, les polyvinylpyrrolidones et les alcools polyvinyliques.

Préférentiellement, on utilisera des polyacrylamides.

Les polyelectrolytes du type cationique susceptibles d'être employés dans la présente invention sont notamment:

les polyamines neutres et es polyamines quaternaires. Plus précisement on peut citer les polyalkylene-amines et les polyhydroxyalkyleneamines, neutres ou quaternaires. A titre d'exemples conviennent particulièrement les homopolymères suivants: le polyethyleneamine, le polychlorure d'hydroxy-2-propyl-1-N-methylammonium, le polychlorure d'hydroxy-2-propyl-1,1-N-dimethylammonium, le polyhydrogéno-sulfate de vinyl-2-imidazolinium, et le polychlorure de diallyl-dimethyl-ammonium. Convient également le copolymère formé par l'acylamide et le chlorure de diallyl-dimethyl-ammonium.

les polyaminoacrylates et les polyaminomethacrylates, et plus précisement les polydialkylamino-alkylacrylates et les polydialkylaminoalkylmethacrylates. A titre d'exemple, le poly-N,N-dimethylamino-ethylmethacrylate, neutre ou quaternaire, convient bien, que ce soit sous la forme de l'homopolymère ou d'un copolymère avec l'acrylamide.

les polyaminoacrylamides et les polyaminomethacrylamides, et plus précisement les polydialkylaminoalkyl acrylamides ou methacrylamides. A titre d'exemples, on peut citer les poly-N-dimethylaminopropylmetacrylamides et les poly-N-dimethylaminoethylacrylamides.

Bien sûr, cette liste de polyelectrolytes n'est donnée qu'à titre d'exemple et n'est nullement limitative. Tous les polyelectrolytes, pris seuls ou en mélanges, à l'exception de ceux du type anionique bien connus de l'homme de l'art, sont en effet susceptibles de convenir pour la mise en oeuvre de la présente invention.

Toutefois, on opérera préférentiellement avec un polyelectrolyte de type non ionique car on a remarqué que ceux-ci permettaient d'aboutir aux meilleurs résultats et en employant les doses les plus faibles.

Comme dans le cas de l'agent adsorbant, le polyelectrolyte peut être introduit à l'une quelconque des étapes de la fabrication du chlorosulfate d'aluminium basique, mais toujours avant l'étape de séparation, notamment de filtration.

Toutefois, selon un mode préférentiel de réalisation de l'invention, on introduit le polyelectrolyte floculant dans le mélange réactionnel obtenu après mise en contact de la bouillie chlorocarbonatée avec le sulfate d'aluminium juste avant l'étape de séparation, notamment de filtration.

Selon un mode encore plus préférentiel de réalisation de l'invention, on introduit avantageusement le polyelectrolyte floculant dans ledit milieu réactionnel après une étape de mûrissement et de refroidissement de ce dernier, telle que définie dans le procédé général.

La quantité d'agent floculant à introduire dépend bien sûr de la qualité désirée pour la solution finale de chlorosulfate d'aluminium basique. Cependant, on a remarqué de manière surprenante que dans tous les cas des doses particulièrement faibles d'agents floculants permettaient d'arriver au résultat recherché.

Pratiquement, on utilise des quantitiés comprises entre 1 et 100 g de polyelectrolytes par tonne de milieu réactionnel, c'est à dire par tonne de mélange obtenu après mise en contact de la bouillie chlorocarbonatée et du sulfate d'aluminium à basifier (mélange de chlorosulfate d'aluminium basique et de gypse).

Après introduction de l'agent adsorbant et du polyelectrolyte floculant, tels que définis dans la description ci-dessus, puis filtration du milieu réactionnel, on obtient une solution de chlorosulfate d'aluminium basique limpide (turbidité pouvant être inférieure à 10 NTU) et incolore.

De plus, on observe des rendements en aluminium sensiblement supérieure à ceux obtenus par le procédé général.

On entend par rendement en aluminium le rapport massique entre la quantité d'aluminium présent sous la forme de chlorosulfate d'aluminium basique (produit final) et la quantité d'aluminium introduit sous la forme de sulfate d'aluminium.

Des exemples concrets illustrant les différents buts poursuivis par la présente invention vont maintenant être données.

## Exemple 1

Cet exemple illustre le procédé de préparation général d'un chlorosulfate d'aluminium basique (P) selon l'invention.

a) On prépare tout d'abord une bouillie de composition suivante:

$CaCl_2$ 122 g
$CaCO_3$ 184 g

On ajoute progressivement cette bouillie à 1500 g de sulfate d'aluminium à 8,3% d'$Al_2O_3$ et 0,32% d'$OH^-$. On agite et on chauffe à 40°C. L'addition de la bouillie se fait sur une durée d'une heure, la température étant maintenue à 40°C.

On laisse le mélange réactionnel une heure sous agitation non cisaillante en laissant refroidir à 20°C. On maintient ensuite le mélange à cette température pendant ½ heurs. On filtre sous un vide de 53329 Pa (400 mmHg). On lave le gâteau avec 200 g d'eau industrielle. On récupère 1295 g de produit titrant 8,65% d'$Al_2O_3$, de densité 1,16 et pH 2,6. On réajuste le titre à 8,3% en $Al_2O_3$ avec de l'eau.

Ce produit répond à la formule:

$Al_2OH_{3,28}Cl_{1,72}(SO_4)_{0,5}$

Basicité 54,7%

Taux de désulfatation: 83%

Taux de polymèrisation par RMN = 85%

Rapport équivalent Al/équivalent Cl: 3,5

Il présente en outre les caractéristiques suivantes:

| | | |
|---|---|---|
| Masse apparente pour 8,3% en $Al_2O_3$ | : | 24000 |
| ØZ (nm) " " | : | 185 (1850 Å) |
| ØW (nm) " " | : | 95 (950 Å) |

b) Détermination de la masse moléculaire moyenne en poids et des diamètres hydrodynamiques réels moyens correspondants du produit obtenu.

α) appareillage utilisé:

ultracentrifugeuse BECKMAN L8-55 équipée d'un rotor Ti 60

mesure de l'increment d'indice v faite par réfractomètre différentiel BRICE PHOENIX réglé sur la raie verte du mercure (λ = 546 nm)

mesures de correlation et d'intensités diffusées faites par un goniomètre MALVERN, un correlateur MALVERN 253 cannaux 4 × 4 bits, et un laser Argon ionisé Spectraphysic modèle 165 pouvant fournir 1,5 Watt environ sur la raie verte (λ = 514,5 nm).

β) mode opératoire

La solution de chlorosulfate d'aluminium basique obtenue par le procédé décrit sous a) est passée dans la centrifugeuse pendant 1 heurs à 10 000 tours/nm, de manière à obtenir une solution limpide et incolore. Le diluant est obtenu par centrifugation pendant 100 heures à 55 000 tours/mn. Après ce temps de centrifugation, on observe un culot gélatineux de polymère au fond du tube et un liquide surnageant qui diffuse une intensité dans la direction 90° inférieure à 0,5 fois celle diffusée par un étalon de benzène. On prépare alors des échantillons de concentration différentes par dilution à l'aide du surnageant de manière à réaliser l'étude en diffusion de la lumière. Chaque échantillon est préalablement clarifié par centrifugation pendant 1 heure à 10 000 tours/mn

γ) résultats

incrément d'indice v: 0,0947 $cm^3/g$

masse moléculaire moyenne en poids obtenue par extrapolation à concentration nulle: 26 400

diamètres hydrodynamiques réels moyens extrapolés à concentration nulle:

$ØZ_r$ = 10 nm (100 Å)

$ØW_r$ = 6,5 nm (65 Å).

### Exemple comparatif 2

Cet exemple illustre un procédé de fabrication d'un chlorosulfate d'aluminium basique ($P_1$) selon l'art antérieur.

a) Le produit de l'art antérieur ($P_1$) est obtenu par attaque de l'alumine par un mélange HCl + $H_2SO_4$. On neutralise par $CaCO_3$ jusqu'au rapport molaire OH/Al de 1,4 et on filtre pour éliminer le gypse.

On obtient un produit de formule $Al_2OH_{2,8}Cl_{2,6}(SO_4)_{0,3}$

Rapport équivalent Al/équivalent Cl: 2,3

| | | |
|---|---|---|
| Masse apparente pour 8,3% d'$Al_2O_3$ | : | 2900 |
| ØZ (nm) | : | 14,4 (144 Å) |
| ØW (nm) | : | 8,5 (85 Å) |

Taux de polymère par RMN = 75%

Le produit a une concentration de 10% en $Al_2O_3$

b) Détermination de $\overline{M}_w$ et des diamètres réels moyens correspondants.

On procède comme dans l'exemple 1b) sauf pour ce qui concerne l'obtention du diluant.

Après 100 heures de centrifugation à 55 000 tours/mn, on observe la séparation de deux phases de viscosté différentes. On isole la phase la moins visqueuse et on lui fait subir à nouveau une centrifugation pendant 60 heures à 55 000 tours/mn. La phase obtenue à l'issue de cette nouvelle centrifugation sera utilisée comme diluant.

Les résultats sont les suivants:
incrément d'indice v: 0,109 $cm^3/g$
masse moléculaire moyenne en poids: 3 600
diamètres réels moyens:
$\varnothing Z_r$ = 4,5 nm (45 Å)
$\varnothing W_r$ = 2,0 nm (20 Å).

Exemple 3

Cet exemple illustre l'application du produit de l'invention au traitement de l'eau.

On compare le produit de l'invention (P) tel qu'obtenu à l'exemple 1 à un produit de l'art antérieur ($P_1$) tel obtenu à l'exemple comparatif 2.

On effectue des essais jar-tests selon le mode opératoire ci-dessous:
bécher de 2 litres
température ambiante
eau de rivière
jar-test
régulation du pH par ajout, soit d'HCl, soit NaOH
agitation rapide 3 min après ajout du coagulant concentré
agitation lente 20 min
décantation 15 min
soutirage 400 ml
analyses — pH
aluminium (absorption atomique)
(appareil HEWLETT PACKARD)
filtration — filtre Nuclépore de 0,4 µm
et dosage de l'aluminium.
L'eau est à une température de 18,3°C pH de 7,8.
Titre hydrométrique = 20° français.

a) Dans une première série d'essais on fait varier la quantité de produit utilisé. Les résultats sont donnés dans le tableau 1. Les quantités de produits P ou $P_1$ varient de 5 à 27 g de solution à 8,3% ou 10% d'$Al_2O_3$ respectivement par $m^3$ d'eau traitée.

Tableau 1

| Dose de traitement | Aluminium (ppb sur eau filtrée 0,4 µm) | |
|---|---|---|
| | $P_1$ | P (selon l'invention) |
| 5 $g/m^3$ | 110 | 80 |
| 10 $g/m^3$ | 130 | 90 |
| 17 $g/m^3$ | 150 | 100 |
| 27 $g/m^3$ | 170 | 100 |

b) Deuxième série d'essais

A même dose de traitement en $Al_2O_3$ (1,5 g/$m^3$), on fait varier le pH de 7,1 à 8,45 par ajout HCl ou NaOH. Les résultats sont indiqués sur le Tableau 2.

Tableau 2

| pH de l'eau traitée | $P_1$ | P selon l'invention |
|---|---|---|
| | Aluminium (ppb) sur eau filtrée 0,4 µm | |
| 7,1 | 55 | 40 |
| 7,55 | 70 | 50 |
| 8 | 140 | 90 |
| 8,45 | 270 | 130 |

Généralement, la norme en aluminium résiduaire est fixée à 200 ppb. On voit donc qu'avec le produit de l'art antérieur, il est nécessaire de travailler à un pH de préférence inférieur à 8 alors que dans le cas du produit de l'invention, à un pH de 8,45 on est encore largement en deça de la norme.

Exemple 4

Cet exemple illustre l'amélioration apportée par un procédé continu au niveau du coefficient de cohésion des boues.

1) Préparation des échantillons

a) conditions opératoires communes

Les réacteurs de basification sont agités modérement par des ancres de manière à maintenir la bouillie obtenu homogène. Ces réacteurs sont maintenus à une température de 40°C par bain marie pendant le temps de basification.

Puis on procède à un murissement de la bouillie finale à 35—40°C pendant 2 heures, et à un refroidissement à 20°C pendant une heure, cette bouillie est ensuite filtrée sous vide sur toile polyester (vide 93325 Pa (700 mmHg)). Le gâteau de gypse est lavé avec la même quantité d'eau pour tous les essais; la solution issue du lavage est récupérée dans le premier filtrat.

Enfin, tous les produits obtenus sont amenés au titre de 8,3% d'$Al_2O_3$ afin de conduire le test de coefficient de cohésion des boues.

b) Préparation de la bouillie chlorocarbonatée

A 1 kg d'eau, on rajoute sous agitation jusqu'à dissolution complète 0,739 kg de $CaCl_2$ anhydre et, après dissolution du $CaCl_2$, 1,281 kg de craie broyée dont la granulométrie moyenne est voisine de 10 micromètres. On obtient après 2 heures d'agitation une bouillie dont le poids est ajusté à 3,020 kg.

Cette bouillie est maintenue sous agitation à 40°C. Elle servira de réactif de basification et de désulfatation dans la préparation des échantillons de chlorosulfate d'aluminium basique.

c) On prépare alors respectivement par la voie discontinue (échantillons A, B et C) et par la voie continue (échantillons D, E et F) des produits de différentes compositions finales par ajout de quantités appropriées de bouillie chlorocarbonatée à 2 kg de sulfate d'aluminium à 8,2% d'$Al_2O_3$ en poids et de basicité 3% (OH/3A1 × 100).

Les quantités de réactif utilisées et les compositions des produits obtenus sont données dans le tableau 3 ci-dessous.

Dans le case de la voie discontinue, les quantités de bouillie chlorocarbonatée sont introduites en 2 heures de temps au sulfate d'aluminium.

Dans le cas de la voie continue, on s'est limité pour des raisons purement pratiques à un procédé continue en 2 étapes.

Dans un premier réacteur de 3 litres, on introduit sur une durée de 1 heure proportionnellement et en continu tout le sulfate d'aluminium et 0,325 kg de bouillie chlorocarbonatée de manière à ce que la basicité théorique du sulfate d'aluminium sortant de ce premier réacteur soit de 30% environ.

Le produit issu du premier réacteur est introduit dans un deuxième réacteur de mêmes caractéristiques que le premier, sur une durée de 2 heures conjointement et proportionnellement à la quantité de bouillie chlorocarbonatée nécessaire à l'obtention de la basicité théroique finale désirée.

TABLEAU 3

| Echantillons | Basicité théorique finale désirée % | Taux de désulfatation correspondant % | Basicité réelle % | Titre pondéral en $Al_2O_3$ % | Bouillie chlorocarbonatée kg voie discontinue | Bouillie chlorocarbonatée kg voie continue 2 étapes |
|---|---|---|---|---|---|---|
| A | 52 | 77,5 | 52,2 | 8,89 | 0,558 | |
| B | 55 | 82 | 55,2 | 8,55 | 0,590 | |
| C | 58 | 86,5 | 58,4 | 8,36 | 0,622 | |
| D | 52 | 77,5 | 51,6 | 8,41 | | 0,325 puis 0,233 |
| E | 55 | 82 | 54,9 | 8,16 | | 0,325 puis 0,265 |
| F | 58 | 86,5 | 58,2 | 8,62 | | 0,325 puis 0,297 |

2) Performance des produits au niveau du coefficient de cohésion des boues

a) test utilisé

Il a été utilisé le mode opératoire décrit dans le "Memento technique de l'eau", édité par DEGREMONT en 1978, pages 951—952.

On utilise une éprouvette de 250 ml dans laquelle on introduit la boue récoltée dans différents béchers au cours de l'essai de floculation, chaque bécher ayant reçu les mêmes doses de réactifs.

On laisse au repos 10 minutes. Puis on siphonne l'excès de boue introduite de façon à ne laisser dans l'éprouvette qu'un volume apparent d'environ 50 ml.

On fait pénétrer par le fond de l'éprouvette de l'eau qui doit être obligatoirement l'eau décantée au cours de l'essai préalable de floculation.

Ceci a pour effet de mettre la boue en expansion et l'on détermine les vitesses ascensionnelles de l'eau qui correspondent à différents états d'expansion de la boue.

On mesure le temps T (en secondes) correspondant à l'introdution de 100 ml d'eau pour des volumes apparents V ml de la boue égaux à: 100—125—150—175—200 ml. Pour calculer la vitesse v si A est la hauteur en millimètres de l'éprouvette qui correspond à 100 ml (distance entre le trait 100 et 200 ml sur l'éprouvette de 250 ml), v est égale à

$$\frac{3,6\ A}{T}$$

mètre par heure.

On représente graphiquement les résultats en portant v en ordonnée et V en abscisse, ces deux valeurs étant liées par la relation:

$$v = K\left(\frac{V}{Vo} - 1\right)$$

dans laquelle:

V: volume apparent de la boue en expansion;

v: vitesse ascensionnelle dans l'éprouvette nécessaire pour obtenir le volume V;

Vo: volume de la boue tassée correspondant à une vitesse nulle et mesurée sur le graphique.

Le coefficient K est appelé coefficient de cohésion de la boue et correspond à la vitesse ascensionnelle dans l'éprouvette nécessaire pour obtenir une expansion double du volume de boue initiale.

b) Mesures

L'eau traitée est une eau filtreée grossièrement sur sable provenant de la rivière de l'Oise.

Sa température est de 24°C.

Son pH est de 8 et sa turbidité de 1,4 NTU.

Le taux de matières organiques en mg d'$O_2$/l est de 3,90 (méthode de dosage au permanganate en milieu acide).

La floculation a été obtenue par ajout de 20 ppm des produits échantillons A à F dans les conditions suivantes:

3 mn agitation rapide (180 t/mn)

15 mn agitation lente (50 t/mn)

décantation 20 mn.

Le test DEGREMONT sur les boues formées donne alors les résultats reportés dans le tableau 4 ci-dessous:

TABLEAU 4

| | DISCONTINU | | | CONTINU 2 ETAPES | | |
|---|---|---|---|---|---|---|
| Echantillons | A | B | C | D | E | F |
| Coefficient de cohésion de boue K | 0,82 | 0,85 | 0,80 | 0,96 | 0,90 | 1,02 |

Ces résultats mettent bien en évidence la nette amélioration des coefficients de cohésion des boues obtenues par floculation au moyen des chlorosulfates d'aluminium basiques obtenus par la voie continue en plusieurs étapes, notamment pour les produits à haute basicité.

Example 5

Cet exemple illustre l'amélioration apportée au procédé générall au niveau de la coloration et la turbidité des produits obtenus.

1) Essai 1

Cet essai illustre le procédé de fabrication d'un chlorosulfate d'aluminium basique selon le procédé général.

On attaque 292,9 g d'une craie industrielle commercialisée sous le nom de marque "CALCITEC 2000" par la société C.P.C., par 241,2 g d'HCl à 33% en poids.

On ajoute progressivement la bouillie ainsi obtenue à 1500 g de sulfate d'aluminium titrant 8,3% d'$Al_2O_3$ et 0,32% d'$OH^-$.

L'ajout de cette bouillie se fait sur une durée d'une heure sous agitation modéré et à une température de 40°C.

Puis on maintient le mélange réactionnel ainsi obtenu (chlorosulfate d'aluminium basique + gypse) sous agitation non cisaillante et à 40°C pendant une heure.

Puis on laisse refroidir ce mélange réactionnel jusqu'a 20°C pendant 2 heurs, toujours sous agitation.

On filtre sous vide 53329 Pa (400 mmHg). On sépare ainsi gâteau de gypse et filtrat. On lave le gâteau avec de l'eau de manière à récupérer une solution de chlorosulfate d'aluminium basique titrant 8,3% d'$Al_2O_3$ et présentant une basicité de 54,6% et un taux de désulfatation de 84%.

Le rendement en aluminium est de 88%.

On observe que la solution obtenue est très turbide, de turbidité bien supérieure à 100 NTU, et fortement colorée, d'un brun très foncé.

2° Essais 2 à 5

On procède comme dans l'essai 1 mais en plus:

on ajoute lors de l'étape de la préparation de la bouillie chlorocarbonatée 5,4 g de charbon actif, ce qui correspond à 3,6 kg de charbon actif par tonne de sulfate d'aluminium à basifier.

Le charbon actif utilisé est commercialisé sous le nom de marque "ACTICARBONE 2S" par la société CECA.

et on ajoute après mûrissement et refroidissement du milieu réactionnel obtenu après mise en contact de la bouillie chlorocarbonatée avec le sulfate d'aluminium, un polyelectrolyte floculant non ionique du type polyacrylamide (pooids moléculaires $>10^6$) et commercialisé sous le nom de marque "FLOERGER 920 SH" par la société FLOERGER.

On a fait varier la quantité de polyelectrolyte introduit, cette quantité étant exprimée en g/tonne de milieu réactionnel (mélange chlorosulfate d'aluminium basique + gypse). Les résultats sont reportés dans le tableau 5 ci-dessous:

TABLEAU 5

| N° essai | Charbon actif kg/t de sulfate d'aluminium | Polyelectrolyte g/tonne de milieu réactionnel | Turbidité (NTU) | Coloration à l'oeil | Rendement aluminium % |
|---|---|---|---|---|---|
| 2 | 3,6 | 0 | 40 | brun clair | 89,8 |
| 3 | 3,6 | 6 | 14 | incolore | 92 |
| 4 | 3,6 | 19 | 11 | incolore | 92,3 |
| 5 | 3,6 | 36 | 11 | incolore | 91,5 |

On remarque que très peu d'agent floculant suffit (à partir de 6 ppm) pour arriver à un excellent résultat tant au niveau de la coloration que de la turbidité. De plus, on remarque une nette amélioration au niveau du rendement en aluminium qui se traduit par un gain de 4% par rapport au produit de l'essai 1.

3) Essais 6 à 10

Ces essais illustrent le procédé amélioré selon l'invention avec utilisation de différents polyélectrolytes.

La mise en oeuvre des étapes se fait comme dans les essais 2 à 5.

Les produits utilisés sont les suivants:

HCl 33: 246,5 g

craie industrielle commercialisée sous le nom de marque "STANDART PR 2" par la société BMP: 298,3 g

sulfate d'aluminium à 8,3% en $Al_2O_3$ et 0,32% en OH: 1500 g

charbon actif "ACTICARBONE 2S": 2,5 kg/tonne de sulfate d'aluminium.

On fait alors varier la nature et les quantités des polyelectrolytes utilisés.

Les polyelectrolytes de marque "FLOCOGIL" sont commercialisés par la Société RHONE-POULENC.

Le "FLOCOGIL AD 10" est un polymère non ionique à 100% polyacylamide.

Le "FLOCOGIL C 1090" est un copolymère faiblement cationique comportant 90% de polyacrylamide et 10% de polychlorure de methacrylate d'éthyl-trimethyl ammonium.

Le "FLOCOGIL C 4" est un polymère fortement cationique à 100% polychlorure de methacylate d'éthyl-trimethyl ammonium.

Tous ces polyelectrolytes ont des poids moléculaires supérieurs à plusieurs millions.

Les résultats obtenus sont donnés dans le tableau 6 ci-dessous.

On constate que tous les polyelectrolytes utilisés permettent, au moins à partir d'une certaine quantité, d'aboutir à des produits de faible turbidité et incolores, ou pratiquement incolores. On constate toutefois que les polyélectrolytes de type non ioniques permettent d'obtenir ces résultats avec les doses les plus faibles, ce qui traduit une meilleure efficacité.

TABLEAU 6

| N° essai | Polyectrolyte | Gramme de polyelectrolyte par tonne de milieu réactionnel | Turbidité (NTU) | Coloration à l'oeil | Rendement aluminium % |
|---|---|---|---|---|---|
| 6 | néant | 0 | très supérieure à 100 | brun foncé | 72 |
| 7 | FLOEGER 920 SH | 37 | 20 | incolore | 72 |
| 8 | FLOCOGIL AD 10 | 49 | 35 | incolore | 76,9 |
| 9 | FLOCOGIL C1090 | 100 | 20 | pratiquement incolore | 72,9 |
| 10 | FLOCOGIL C4 | 100 | 40 | pratiquement incolore | 72,5 |

**Revendications**

1. Chlorosulfate d'aluminium basique comprenant un produit ayant pour formule:

$$Al_nOH_m(SO_4)_kCl_{3n-m-2k}$$

dans laquelle la basicité ou le rapport

$$\frac{m}{3n} \times 100$$

est compris entre 40% et 65%, en ce qu'il présente un rapport équivalent Al/équivalent Cl compris entre 2,8 et 5, une masse moléculaire apparente MA mesurée par diffusion de lumière classique de valeurs suivantes: MA = 7 000—35 000, ledit chlorosulfate d'aluminium basique étant caractérisé en ce qu'il présente des diamètres hydrodynamiques apparents ØZ et ØW mesurés par diffusion quasi-élastique de la lumière de valeurs suivantes:

ØZ (nm) = 35—2 50 (350—2500 Å)

ØW (nm) = 20—1 20 (200—1200 Å)

2. Chlorosulfate d'aluminium basique selon la revendication 1, caractérisé en ce que le produit précité présente une masse moléculaire apparente et des diamètres hydrodynamiques apparents tels que définis plus haut de valeurs suivantes:

MA = 22 000—32 000

ØZ (nm) = 1 50—2 20 (1500—2200 Å)

ØW (nm) = 80—1 10 (800—1100 Å)

3. Chlorosulfate d'alumine basique comprenant un produit ayant pour formule:

$$Al_nOH_m(SO_4)_kCl_{3n-m-2k}$$

dans laquelle la basicite ou le rapport

$$\frac{m}{3n} \times n$$

est comprise entre 40% et 65% et en ce qu'il présente un rapport équivalent Al/équivalent Cl, compris entre 2,8 et 5, ledit chlorosulfate d'alumine basique étant caractérisé en ce qu'il présente une masse moléculaire moyenne en poids Mw et des diamètres hydrodynamiques reels moyens $ØZ_r$ et $ØW_r$ de valeurs de valeurs suivantes:

Mw = 10 000—300 000

$ØZ_r$ (nm) = 9—45 (90—450 Å)

$ØW_r$ (nm) = 5—30 (50—300 Å)

4. Chlorosulfate d'aluminium basique selon la revendication 3 caractérisé en ce que le produit précité présente une masse moléculaire moyenne en poids et des diamètres hydrodynamiques réels moyens tels que définis plus haut de valeurs suivantes:

Mw = 19 000—30 000

$ØZ_r$ (nm) = 10—15 (100—150 Å)

$ØW_r$ (nm) = 6—8 (60—80 Å)

5. Mélange réactionnel comportant du sulfate de calcium et un chlorosulfate d'aluminium basique comprenant le produit de formule générale:

$$Al_nOH_m(SO_4)_kCl_{3n-m-2k}$$

caractérisé en ce qu'il est susceptible d'être obtenu par un procédé comprenant une étape de préparation d'une bouillie de chlorure de calcium et de carbonate de calcium (bouillie chlorocarbonatée), une étape de mise en contact de la bouillie chlorocarbonatée avec du sulfate d'aluminium, l'addition de la bouillie se faisant sur une durée variant entre généralement 50 minutes et 4 heures, les quantités de bouillie chlorocarbonatée et de sulfate d'aluminium étant telles que l'on ait pour le chlorosulfate d'aluminium basique obtenu un rapport

$$\frac{m \times 100}{3n}$$

compris entre 40% et 65% et un rapport équivalent Al/équivalent Cl compris entre 2,8 et 5.

6. Chlorosulfate d'aluminium basique caractérisé en ce qu'il est susceptible d'être obtenu par une étape de séparation du mélange réactionnel selon la revendication 5, permettant de séparer un gâteau de sulfate de calcium et un filtrat contenant le dit chlorosulfate d'aluminium basique.

7. Chlorosulfate d'aluminium basique selon l'une quelconque des revendications précédentes caractérisé en ce qu'il présente une basicité comprise entre 45 et 56%.

8. Chlorosulfate d'aluminium basique selon l'une quelconque des revendications précédentes caractérisé en ce qu'il présente un rapport équivalent Al/équivalent Cl compris entre 3,2 et 5.

9. Chlorosulfate d'aluminium basique selon la revendication 8 caractérisé en ce qu'il présente un rapport équivalent Al/équivalent Cl compris entre 3,2 et 4.

10. Chlorosulfate d'aluminium basique selon l'une quelconque des revendications précédentes caractérisé en ce qu'il présente un taux de désulfatation représentant le rapport de la quantité de sulfate éliminé à celle présente dans le suflate d'aluminium de départ, compris entre 70 et 90%, de préférence 70 et 85% et tout particulièrement 75 et 82%.

11. Procédé de préparation d'un mélange réactionnel comportant du sulfate de calcium et un chlorosulfate d'aluminium basique selon l'une quelconque des revendications précédentes, caractérisé en ce qu'il comprend une étape de préparation d'une bouillie de chlorure de calcium et de carbonate de calcium (bouillie chlorocarbonatée) et une étape de mise en contact de la bouillie chlorocarbonatée avec du sulfate d'aluminium, l'addition de la bouillie se faisant sur une durée variant entre 50 minutes et 4 heures.

12. Procédé de préparation d'un chlorosulfate d'aluminium basique selon l'une quelconque des revendications précédentes caractérisé en ce qu'il est obtenu par une étape de séparation du mélange réactionnel obtenu selon le procédé de la revendication 11, permettant de séparer un gâteau de sulfate de calcium et un filtrat contenant ledit chlorosulfate d'aluminium basique.

13. Procédé selon l'une des revendications 11 ou 12 caractérisé en ce que l'on fait réagir en continu la bouillie chlorocarbonatée avec le sulfate d'aluminium.

14. Procédé selon la revendication 13 caractérisé en ce que l'on fait réagir la bouillie chlorocarbonatée avec le sulfate d'aluminium en au moins deux phases successives et dans des conditions telles que la basicité du chlorosulfate d'aluminium présent dans le milieu réactionnel obtenu après chaque phase est croissante de la première à la dernière phase.

15. Procédé selon la revendication 14 caractérisé en ce que l'on fait réagir dans la première phase tout le sulfate d'aluminium avec une première partie de la bouillie chlorocarbonatée et en ce que l'on fait ensuite réagir successivement des fractions de la partie restante de la bouillie chlorocarbonatée avec le milieu réactionnel issu de chacune des phases précédentes, ce par quoi on obtient dans la dernière phase le chlorosulfate d'aluminium de basicité désirée.

16. Procédé selon la revendication 14 ou 15 caractérisé en ce qu l'on procède en deux phases.

17. Procédé selon l'une quelconque des revendications 14 à 16 caractérisé en ce que la basicité du chlorosulfate d'aluminium présent dans le milieu réactionnel issu de la première phase est d'environ 30%.

18. Procédé selon l'une quelconque des revendications 11 à 17 caractérisé en ce que l'on procède avant l'étape de séparation, notamment de filtration, à une étape de mûrissement et une étape de refroidissement du mélange réactionnel contenant le chlorosulfate d'aluminium de basicité désirée.

19. Procédé selon l'une des revendications 11 à 18, caractérisé en ce qu'on fait refroidir le mélange réactionnel précité à une température comprise entre 5°C et 20°C.

20. Procédé selon l'une des revendications 11 à 19, caractérisé en ce qu'on fait mûrir le mélange réactionnel précité pendant une durée comprise entre 45 minutes et 3 heures.

21. Procédé selon l'une des revendications 11 à 20, caractérisé en ce qu'après le mûrissement, on maintient le mélange réactionnel à une température comprise entre 5°C et 20°C pendant une durée comprise entre 15 minutes et 1 h.

22. Procédé selon l'une quelconque des revendications 11 à 21 caractérisé en ce que l'on fait réagir la bouillie chlorocarbonatée avec le sulfate d'aluminium à une températurre comprise entre 35 et 50°C.

23. Procédé selon l'une quelconque des revendications 11 à 22 caractérisé en ce que l'on ajoute dans

au moins une étape ou phase quelconque précitée, ensemble ou séparément, au moins un agent adsorbant et au moins un polyélectrolyte floculant du type non ionique ou cationique.

24. Procédé selon la revendication 23 caractérisé en ce que l'on introduit l'agent adsorbant dans l'étape de préparation de la bouillie chlorocarbonatée.

25. Procédé selon l'une quelconque des revendications 23 et 24 caractérisé en ce que l'on introduit le polyélectrolyte floculant dans le mélange réactionnel contenant le chlorosulfate d'aluminium de basicité désirée, notamment juste avant l'étape de séparation.

26. Procédé selon l'une quelconque des revendications 23 à 25 caractérisé en ce que l'agent adsorbant est du charbon actif.

27. Procédé selon la revendication 26 caractérisé en ce que l'on utilise entre 0,5 et 10 kg de charbon actif par tonne de sulfate d'aluminium à basifier, et plus particulièrement entre 1 et 5 kg.

28. Procédé selon l'une quelconque des revendications 23 à 27 caractérisé en ce que le polyélectrolyte floculant est du type non ionique et choisi dans le groupe comprenant les polyacrylamides, les polyoxydes d'éthylène, les polyvinylpyrrolidones et les alcools polyvinyliques.

29. Procédé selon la revendication 28 caractérisé en ce que le polyélectrolyte floculant est un polyacrylamide.

30. Procédé selon l'une quelconque des revendications 23 à 27 caractérisé en ce que le polyélectrolyte floculant est du type cationique et choisi dans le groupe comprenant les polyamines et les polyamines quaternisées.

31. Procédé selon l'une quelconque des revendications 23 à 30 caractérisé en ce que l'on utilise une quantité comprise entre 1 et 100 grammes de polyélectrolyte par tonne de milieu réactionnel.

32. Procédé de traitement d'un milieu aqueux, caractérisé en ce qu'on ajoute audit milieu une solution d'un chlorosulfate d'aluminium basique du type selon l'une quelconque des revendications 1 à 10 ou du type préparé par le procédé selon l'une quelconque des revendications 11 à 31.

**Patentansprüche**

1. Basisches Aluminiumchlorsulfat, umfassend ein Produkt der Formel:

$$Al_nOH_m(SO_4)_kCl_{3n-m-2k}$$

wobei die Basizität oder das Verhältnis

$$\frac{m}{3n} \times 100$$

zwischen 40 und 65% liegt und wobei ein Verhältnis Al-Äquivalent zu Cl-Äquivalent zwischen 2,8 und 5 vorleigt, eine scheinbare Molekularmasse MA, gemessen durch die klasische Lichtstreuung von: MA = 7000—35000, wobei das basische Aluminiumchlorsulfat dadurch gekennzeichnet ist, daß die scheinbaren hydrodynamischen Durchmesser ØZ und ØW, gemessen durch quasielastische Streuung des Lichtes, die folgenden Werte aufweisen:

ØZ (nm) = 35—250 (350—2500 Å)

ØW (nm) = 20—120 (200—1200 Å)

2. Basisches Aluminiumchlorsulfat nach Anspruch 1, dadurch gekennzeichnet, daß das oben genannte Produkt eine scheinbare Molekularmasse und scheinbare hydrodynamische Durchmesser, wie oben definiert, mit den folgenden Werten hat:

MA = 22000—32000

ØZ (nm) = 150—220 (1500—2200 Å)

ØW (nm) = 80—110 (800—1100 Å)

3. Basisches Aluminiumchlorsulfat, umfassend ein Produkt der Formel:

$$Al_nOH_m(SO_4)_kCl_{3n-m-2k}$$

wobei die Basizität oder das Verhältnis

$$\frac{m}{3n} \times 100$$

zwischen 40 und 65% liegt und wobei ein Verhältnis Al-Äquivalent zu Cl-Äquivalent zwischen 2,8 und 5 vorleigt, wobei das basische Aluminiumchlorsulfat dadurch gekennzeichnet ist, daß es eine mittlere Molekularmasse, bezogen auf das Gewicht, Mw, und mittlere reale hydrodynamische Durchmesser $ØZ_r$ und $ØW_r$ mit den folgenden Werten besitzt:

$$Mw = 1000—300000$$

$$ØZ_r \text{ (nm)} = 9—45 \text{ (90—450 Å)}$$

$$ØW_r \text{ (nm)} = 5—30 \text{ (50—300 Å)}$$

4. Basisches Aluminiumchlorsulfat nach Anspruch 3, dadurch gekennzeichnet, daß das genannte Produkt eine mittlere Molekularmasse, bezogen auf das Gewicht, und tatsächliche mittlere hydrodynamische Durchmesser, wie oben definiert, mit den folgenden Werten besitzt:

$$Mw = 19000—30000$$

$$ØZ_r \text{ (nm)} = 10—15 \text{ (100—150 Å)}$$

$$ØW_r \text{ (nm)} = 6—8 \text{ (60—80 Å)}.$$

5. Reaktionsgemisch, enthaltend Calciumsulfat und ein basisches Aluminiumchlorsulfat, enthaltend ein Produkt der allgemeinen Formel:

$$Al_nOH_m(SO_4)_kCl_{3n-m-2k}$$

dadurch gekennzeichnet, daß es erhalten werden kann nach einem Verfahren, umfassend eine Herstellungsstufe, in der eine Aufschlämmung von Calciumchlorid und Calciumcarbonat (Chlorcarbonataufschlämmung) hergestellt wird, eine Stufe, bei der die Chlorcarbonataufschlämmung mit Aluminiumsulfat zusammengebracht wird, wobei die Zugabe der Aufschlämmung sich über einen Zeitraum von im allgemeinen 50 min bis 4 h erstreckt und die Menge der Chlorcarbonataufschlämmung und des Aluminiumsulfats so gewählt wird, daß das erhaltene basische Aluminiumchlorsulfat ein Verhältnis

$$\frac{m}{3n} \times 100$$

zwischen 40 und 65% aufweist und ein Verhältnis Al-Äquivalent zu Cl-Äquivalent zwischen 2,8 und 5.

6. Basisches Aluminiumchlorsulfat, dadurch gekennzeichnet, daß es erhalten werden kann in einer Stufe der Auftrennung des Reaktionsgemisches nach Anspruch 5, die es erlaubt, einen Calciumsulfatkuchen und ein Filtrat zu erhalten, das das erwähnte basische Aluminiumchlorsulfat enthält.

7. Basisches Aluminiumchlorsulfat nach einem der vorangehenden Ansprüche, dadurch gekennzeichnet, daß es eine Basizität zwischen 45 und 56% besitzt.

8. Basisches Aluminiumchlorsulfat nach einem der vorangehenden Ansprüche, dadurch gekennzeichnet, daß es eine Verhältnis Al-Äquivalent zu Cl-Äquivalent zwischen 3,2 und 5 aufweist.

9. Basisches Aluminiumchlorsulfat nach Anspruch 8, dadurch gekennzeichnet, daß es ein Verhältnis Al-Äquivalent zu Cl-Äquivalent zwischen 3,2 und 4 aufweist.

10. Basisches Aluminiumchlorsulfat nach einem der vorangehenden Ansprüche, dadurch gekennzeichnet, daß es einen Desulfatisierungsgrad besitzt, der das Verhältnis der Menge an abgetrenntem Sulfat zu dem zu Beginn vorhandenen Aluminiumsulfat angibt, zwischen 70 und 90%, vorzugsweise 70 bis 85% und insbesondere 75 bis 82%.

11. Verfahren zur Herstellung eines Reaktionsgemisches, umfassend Calciumsulfat und ein basisches Aluminiumchlorsulfat nach einem der vorangehenden Ansprüche, dadurch gekennzeichnet, daß es eine Stufe der Herstellung einer Aufschlämmung von Calciumchlorid und Calciumcarbonat (Chlorcarbonataufschlämmung) und eine Stufe des Zusammenbringens der Chlorcarbonataufschlämmung mit Aluminiumsulfat umfaßt, wobei die Zugabe der Aufschlämmung sich über einen Zeitraum zwischen 50 min und 4 h erstreckt.

12. Verfahren zur Herstellung eines basischen Aluminiumchlorsulfats nach einem der vorangehenden Ansprüche, dadurch gekennzeichnet, daß es erhalten wird durch eine Stufe der Auftrennung des nach dem Verfahren des Anspruchs 11 erhaltenen Reaktionsgemisches, wobei ein Calciumsulfatkuchen und ein Filtrat, das das basische Aluminumchlorsulfat enthält, erhalten werden.

13. Verfahren nach den Ansprüchen 11 oder 12, dadurch gekennzeichnet, daß man kontinuierlich die Chlorcarbonataufschlämmung mit dem Aluminumsulfat umsetzt.

14. Verfahren nach Anspruch 13, dadurch gekennzeichnet, daß man die Chlorcarbonataufschlämmung

mit dem Aluminiumsulfat in mindestens zwei aufeinanderfolgenden Phasen und unter solchen Bedingungen miteinander umsetzt, daß die Basizitat des Aluminium-chlorsulfats in dem nach jeder Phase erhaltenen Reaktionsmedium zwischen der ersten und der letzten Phase ansteigt.

15. Verfahren nach Anspruch 14, dadurch gekennzeichnet, daß man in der ersten Phase das gesamte Aluminiumsulfat mit einem ersten Anteil der Chlorcarbonataufschlämmung zusammenbringt und daß man anschließend aufeinanderfolgende Anteile der restlichen Chlorcarbonataufschlämmung zu dem in jeder der vorangehenden Phasen entsandenen Reaktionsmedium zugibt, so daß man in der letzten Phase das Aluminiumchlorsulfat mit der gewünschten Basizität erhält.

16. Verfahren nach Anspruch 14 oder 15, dadurch gekennzeichnet, daß man in zwei Phasen arbeitet.

17. Verfahren nach einem der Ansprüche 14 bis 16, dadurch gekennzeichnet, daß die Basizität des Aluminiumchlorsulfats in dem Reaktionsmedium aus der ersten Phase etwa 30% beträgt.

18. Verfahren nach einem der Ansprüche 11 bis 17, dadurch gekennzeichnet, daß man vor der Trennstufe, insbesondere durch Filtration, eine Reifungstufe une eine Stufe, in der das Reaktionsgemisch, das das Aluminiumchlorsulfat der gewünschten Basizität enthält, gekühlt wird, durchführt.

19. Verfahren nach einem der Ansprüche 11 bis 18, dadurch gekennzeichnet, daß man das oben erwähnte Reaktionsgemisch auf eine Temperatur zwischen 5°C und 20°C kühlt.

20. Verfahren nach einem der Ansprüche 11 bis 19, dadurch gekennzeichnet, daß man das oben erwähnte Reaktionsgemisch während eines Zeitraums von 45 min bis 3 h reifen lässt.

21. Verfahren nach einem der Ansprüche 11 bis 20, dadurch gekennzeichnet, daß man nach der Reifung das Reaktionsgemisch während eines Zeitraums zwischen 15 min und 1 h auf einer Temperatur zwischen 5°C und 20°C hält.

22. Verfahren nach einem der Ansprüche 11 bis 21, dadurch gekennzeichnet, daß man die Chlorcarbonataufschlämmung mit dem Aluminiumsulfat bei einer Temperatur zwischen 35 und 50°C umsetzt.

23. Verfahren nach einem der Ansprüche 11 bis 22, dadurch gekennzeichnet, daß man in mindestens einer Stufe oder Phase, wie oben erwähnt, zusammen oder getrennt mindestens ein Adsorptionsmittel und mindestens einen Ausflokungspolyelektrolyt vom nichtionischen oder kationischen Typ zugibt.

24. Verfahren nach Anspruch 23, dadurch gekennzeichnet, daß man das Adsorptionsmittel in der Stufe der Herstellung der Chlorcarbonataufschlämmung zusetzt.

25. Verfahren nach einem der Ansprüche 23 und 24, dadurch gekennzeichnet, daß man den Austlockungspolyelektrolyt zu den Reaktionsgemisch, enthaltend das Aluminiumchlorsulfat der gewünschten Basizität, zusetzt, insbesondere unmittelbar vor der Trennstufe.

26. Verfahren nach einem der Ansprüche 23 bis 25, dadurch gekennzeichnet, daß das Adsorptionsmittel Aktivkohle ist.

27. Verfahren nach Anspruch 26, dadurch gekennzeichnet, daß man zwischen 0,5 und 10 kg Aktivkohle pro Tonne basisch zu machendes Aluminiumsulfat und insbesondere zwischen 1 und 5 kg zusetzt.

28. Verfahren nach einem der Ansprüche 23 bis 27, dadurch gekennzeichnet, daß der Ausflockungspolyelektrolyt vom nichtionischen Typ ist und ausgewählt ist aus der Gruppe, umfassend die Polyacrylamide, die Ethylenpolyoxide, die Polyvinylpyrrolidone und die Polyvinylalkohole.

29. Verfahren nach Anspruch 28, dadurch gekennzeichnet, daß der Ausflockungspolyelektrolyt ein Polyacrylamid ist.

30. Verfahren nach einem der Ansprüche 23 bis 27, dadurch gekennzeichnet, daß der Ausflockungspolyelektrolyt vom kationischen Typ ist und ausgewählt ist aus der Gruppe, umfassend die Polyamine und die quaternisierten Polyamine.

31. Verfahren nach einem der Ansprüche 23 bis 30, dadurch gekennzeichnet, daß man zwischen 1 und 100 g Polyelektrolyt pro Tonne Reaktionsmedium verwendet.

32. Verfahren zur Behandlung eines wäßrigen Mediums, dadurch gekennzeichnet, daß man zu diesem Medium eine Lösung von basischem Aluminiumchlorsulfat nach einem der Ansprüche 1 bis 10 oder hergestellt nach dem Verfahren nach einem der Ansprüche 11 bis 31 zugibt.

## Claims

1. A basic aluminium chlorosulphate which comprises a substance of the following formula:

$$Al_nOH_m(SO_4)_kCl_{3n-m-2k}$$

in which the basicity or the ratio

$$\frac{m}{3n} \times 100$$

is between 40% and 65%, having an Al equivalent/Cl equivalent ratio of between 2.8 and 5, an apparent molecular mass AM measured by conventional light diffusion of the following values: AM = 7000—35000, said basic aluminium chlorosulphate being characterised in that it has apparent hydrodynamic diameters ØZ and ØW as measured by quasi-elastic diffusion of light, of the following values:

$$ØZ\ (nm) = 35—250\ (350—2500\ Å)$$

$$ØW\ (nm) = 20—120\ (200—1200\ Å)$$

2. A basic aluminium chlorosulphate according to claim 1 characterised in that said substance has an apparent molecular mass and apparent hydrodynamic diameters as defined hereinbefore, of the following values:

$$MA = 22000—32000$$

$$ØZ\ (nm) = 150—220\ (1500—2200\ Å)$$

$$ØW\ (nm) = 80—110\ (800—1100\ Å)$$

3. A basic aluminium chlorosulphate which comprises a substance of the formula:

$$Al_nOH_m(SO_4)_kCl_{3n-m-2k}$$

in which the basicity or the ratio

$$\frac{m}{3n} \times 100$$

is between 40% and 65%, having an Al equivalent/Cl equivalent ratio of between 2.8 and 5, said basic aluminium chlorosulphate being characterised in that it has a mean molecular mass by weight Mw and mean real hydrodynamic diameters $ØZ_r$ and $ØW_r$ of the following values:

$$Mw = 10000—300000$$

$$ØZ_r\ (nm) = 9—45\ (90—450\ Å)$$

$$ØW_r\ (nm) = 5—30\ (50—300\ Å)$$

4. Basic aluminium chlorosulphate according to claim 3 characterised in that said substance has a mean molecular mass by weight and mean real hydrodynamic diameters as defined hereinbefore, of the following values:

$$Mw = 19000—30000$$

$$ØZ_r\ (nm) = 10—15\ (100—150\ Å)$$

$$ØW_r\ (nm) = 6—8\ (60—80\ Å)$$

5. A reaction mixture comprising calcium sulphate and a basic aluminium chlorosulphate comprising the substance of the following general formula:

$$Al_nOH_m(SO_4)_kCl_{3n-m-2k}$$

characterised in that it can be produced by a process comprising a step for preparation of a slurry of calcium chloride and calcium carbonate (chlorocarbonated slurry), a step for bringing the chlorocarbonated slurry into contact with aluminium sulphate, the addition of the slurry taking place over a period varying between generally 50 minutes and 4 hours, the amounts of chlorocarbonated slurry and aluminium sulphate being such that, for the basic aluminium chlorosulphate produced, there is a ratio

$$\frac{m}{3n} \times 100$$

or between 40% and 65% and an Al equivalent/Cl equivalent ratio of between 2.8 and 5.

6. Basic aluminium chlorosulphate characterised in that it can be produced by a step for separation of the reaction mixture according to claim 5, permitting separation of a calcium sulphate cake and a filtrate containing said basic aluminium chlorosulphate.

7. Basic aluminium chlorosulphate according to any one of the preceding claims characterised in that it has a basicity of between 45 and 56%.

8. Basic aluminium chlorosulphate according to any one of the preceding claims characterised in that it has an Al equivalent/Cl equivalent ratio of between 3.2 and 5.

9. Basic aluminium chlorosulphate according to claim 8 characterised in that it has an Al equivalent/Cl equivalent ratio of between 3.2 and 4.

10. Basic aluminium chlorosulphate according to any one of the preceding claims characterised in that it has a degree of desulphatation representing the ratio of the amount of sulphate eliminated to that present in the initial aluminium sulphate of between 70 and 90%, preferably 70 and 85% and more particularly 75 and 82%.

11. Process for the preparation of a reaction mixture comprising calcium sulphate and a basic aluminium chlorosulphate according to any one of the preceding claims characterised in that it comprises a step for preparation of a slurry of calcium chloride and calcium carbonate (chlorocarbonated slurry) and a step for bringing the chlorocarbonated slurry into contact with aluminium sulphate, the addition of the slurry taking place over a period of between 50 minutes and 4 hours.

12. Process for the preparation of a basic aluminium chlorosulphate according to any one of the preceding claims characterised in that it is obtained by a step for separation of the reaction mixture obtained by the process according to claim 11, thereby permitting separation of a calcium sulphate cake and a filtrate containing the basic aluminium chlorosulphate.

13. A process according to one of claims 11 and 12 characterised by continuously reacting the chlorocarbonated slurry with aluminium sulphate.

14. A process according to claim 13 characterised by reacting the chlorocarbonated slurry with aluminium sulphate in at least two successive phases and under conditions such that the basicity of the aluminium chlorosulphate present in the reaction medium obtained after each phase increases from the first phase to the last.

15. A process according to claim 14 characterised by reacting in the first phase all the aluminium sulphate with a first part of the chlorocarbonated slurry and then successively reacting fractions of the remaining part of the chlorocarbonated slurry with the reaction medium issuing from each of the preceding phases, thereby producing in the last phase the aluminium chlorosulphate of the desired basicity.

16. A process according to claim 14 or claim 15 characterised by operating in two phases.

17. A process according to any one of claims 14 to 16 characterised in that the basicity of the aluminium chlorosulphate present in the reaction medium issuing from the first phase is about 30%.

18. A process according to any one of claims 11 to 17 characterised in that, prior to the separation step, in particular by filtration, there are carried out a step for maturing and a step for cooling of the reaction mixture containing the aluminium chlorosulphate of the desired basicity.

19. A process according to one of claims 11 to 18 characterised in that said reaction mixture is cooled to a temperature of between 5°C and 20°C.

20. A process according to one of claims 11 to 19 characterised in that said reaction mixture is matured for a period of between 45 minutes and 3 hours.

21. A process according to one of claims 11 to 20 characterised in that after the maturing operation, the reaction mixture is maintained at a temperature of between 5°C and 20°C for a period of between 15 minutes and 1 hour.

22. A process according to any one of claims 11 to 21 characterised in that the chlorocarbonated slurry is reacted with the aluminium sulphate at a temperature of between 35 and 50°C.

23. A process according to any one of claims 11 to 22 characterised in that at least one adsorbing agent and at least one flocculating polyelectrolyte of the non-ionic or cationic type are added in at least any one of said steps or phases, together or separately.

24. A process according to claim 23 characterised in that the absorbing agent is introduced in the step for preparation of the chlorocarbonated slurry.

25. A process according to either one of claims 23 and 24 characterised in that the flocculating polyelectrolyte is introduced into the reaction mixture containing the aluminium chlorosulphate of the desired basicity, in particular just before the separation step.

26. A process according to any one of claims 23 to 25 characterised in that the adsorbing agent is activated carbon.

27. A process according to claim 26 characterised in that between 0.5 and 10 kg of activated carbon is used per tonne of aluminium sulphate to be subjected to basification, more particularly between 1 and 5 kg.

28. A process according to any one of claims 23 to 27 characterised in that the flocculating polyelectrolyte is of the non-ionic type and is selected from the group comprising polyarylamides, polyethylene oxides, polyvinylpyrrolidones and polyvinyl alcohols.

29. A process according to claim 28 characterised in that the flocculating polyelectrolyte is a polyacrylamide.

30. A process according to any one of claims 23 to 27 characterised in that the flocculating polyelectrolyte is of the cationic type and is selected from the group comprising polyamines and quaternised polyamines.

31. A process according to any one of claims 23 to 30 characterised by using an amount of between 1 and 100 grams of polyelectrolyte per tonne of reaction medium.

32. A process for treating an aqueous medium characterised by adding to said medium a solution of a basic aluminium chlorosulphate of the type according to any one of claims 1 to 10 or of the type prepared by the process according to any one of claims 11 to 31.